(19) **Europäisches Patentamt**

**European Patent Office**

**Office européen des brevets**

(11) Veröffentlichungsnummer: **0 073 918**
**B1**

(12) **EUROPÄISCHE PATENTSCHRIFT**

(45) Veröffentlichungstag der Patentschrift:
**16.01.85**

(21) Anmeldenummer: **82106670.1**

(22) Anmeldetag: **23.07.82**

(51) Int. Cl.⁴: **B 65 D 47/34, F 04 B 9/14**

(54) **Auf Behälter aufsetzbare Pumpe.**

(30) Priorität: **29.08.81 DE 3134265**

(43) Veröffentlichungstag der Anmeldung:
**16.03.83 Patentblatt 83/11**

(45) Bekanntmachung des Hinweises auf die Patenterteilung:
**16.01.85 Patentblatt 85/3**

(84) Benannte Vertragsstaaten:
**AT BE CH DE FR GB LI NL**

(56) Entgegenhaltungen:
**US - A - 3 379 381**
**US - A - 4 046 292**
**US - A - 4 050 613**

(73) Patentinhaber: **Robert Finke Kommanditgesellschaft,**
**Baumschulweg 12, D-5950 Finnentrop 12 (DE)**

(72) Erfinder: **Finke, Robert-Günter, Zur Fielbecke 21,**
**D-5950 Finnentrop (DE)**
Erfinder: **Schumacher, Clemens, Grimmelstrasse 12,**
**D-5768 Sundern 1 (DE)**

(74) Vertreter: **Rieder, Hans-Joachim, Dr. et al,**
**Corneliusstrasse 45 Postfach 11 04 51,**
**D-5600 Wuppertal 11 (DE)**

## Beschreibung

Die Erfindung bezieht sich auf eine auf Behälter, insbesondere Flaschen, aufsetzbare Pumpe zum Entnehmen des Behälterinhaltes, bestehend aus einem Unterteil und einem hierzu teleskopartig verschieblichen Oberteil, welches von Rückstellfedern belastet ist und ein Ventil trägt, das, gegensinnig wirkend zu einem Ventil des Unterteiles, ausgangsseitig der Pumpenkammer angeordnet ist. Eine derartige Pumpe gehört zum Stand der Technik.

Entsprechende, eventuell auch als Zerstäuber im Kosmetiksektor eingesetzte Pumpen weisen durchweg den Nachteil einer zu hohen Teilezahl auf. Dies schlägt sich kostenmässig auf Lagerhaltung und Montage nieder. Der letztere Umstand erschwert überdies auch die Automatisierung der Montage. Weiterhin besteht der Nachteil, dass die Rückstellfedern mit dem Behälterinhalt in Kontakt kommen. Dies beeinträchtigt die Anwendung und Lebensdauer.

Aufgabe der Erfindung ist es, eine gattungsgemässe Pumpe in herstellungstechnisch einfacher, montagegünstigerer Bauform mit grösserer Lebensdauer zu erstellen.

Gelöst ist diese Aufgabe durch die in Anspruch 1 angegebene Erfindung.

Die Unteransprüche sind vorteilhafte Weiterbildungen der erfindungsgemässen Pumpe.

Zufolge solcher Ausgestaltung ist eine montagegünstige, praktisch nur aus drei Grundbauteilen bestehende Pumpe erzielt, wobei den einzelnen Bauteilen eine über die eigentliche Bestimmung hinausgehende Mehrfachfunktion zukommt. Die eine Art Scheidewand darstellende Innenwand des Oberteiles formt auf ihrer Oberseite anteilig die eine Ventilkammer mit davon ausgehendem Mündungskanal. Geschlossen wird das Ganze durch einen von oben her aufgesetzten Deckel, welcher über die Schliessfunktion hinaus noch die der Drucktastenbetätigungsfläche und der Rückstellfedern übernimmt. An der Unterseite dieses Deckels erfolgt die Federabstützung bzw. es gehen dazu dort materialeinheitlich angeformte Federbeine aus. Deren Widerlager ist vom Unterteil gebildet. In vorteilhafter Weise erstrecken sich die Federbeine geschützt in einer gemeinsam von Ober- und Unterteil gebildeten Ringkammer. Der Anwendungsbereich für verschiedenste Behälterinhalte ist erhöht. Von der nach unten, d.h. in Richtung des Unterteiles weisenden Seite der die Scheidewand bildenden Innenwand gehen des weiteren die Mittel aus, die die Pumpenkammer mitformen. In vorteilhafter Weise sind die Federbeine in Umfangsrichtung der Ringkammer gebogen. Das führt zu längeren Federbeinen und zu einer ausgewogenen, weichen Betätigungsweise. Vorzugsweise sind die Federbeine dazu auch in gleicher Winkelverteilung angeordnet. Eine gleichsinnige Biegungsausrichtung kann überdies in vorteilhafter Weise zu einem Sperrversatz genutzt werden, indem durch die Restfederkraft das Oberteil stets in die entsprechende Lage überführt wird. Hierzu lassen sich die bei solchen Einrichtungen bekannten axialen Führungsrippen nutzen, welche in Nuten des anderen Pumpenteiles laufen. Für eine einwandfreie Pumpenfunktion trotz der geringen Anzahl von Bauteilen ist weiter so vorgegangen, dass die Pumpenkammer von zwei ineinandergreifenden Ringwandpaaren des Ober- und Unterteiles gebildet sind, wobei die Ringwände des Oberteiles mit Dichtlippen längs den Flächen der Ringwände des Unterteiles derart schleifen, dass die äussere Ringwand des Oberteiles mit zwei Dichtlippen an beiden Ringwänden des Unterteiles schleift. Die paarig vorgesehenen Ringwände versteifen die pumpenbildenden Bauteile. Es kann von sehr dünnwandigen Spritzteilen ausgegangen werden. Zudem ist in vorteilhafter Weise der Raum zwischen den beiden Ringwänden des Unterteiles zur Bildung eines Luftausgleichskanals herangezogen. Um in Grundstellung einen optimalen Dichtschluss zu erreichen, sind an der Ringwand bloss Luftübertrittsnischen vorgesehen. Bei überfahrenden Dichtlippen ist jeweils kurzzeitig der Luftausgleich möglich.

Weitere Vorteile und Einzelheiten des Gegenstandes der Erfindung sind nachstehend anhand eines zeichnerisch veranschaulichten Ausführungsbeispieles näher erläutert. Es zeigen:

Fig. 1 den Vertikalschnitt durch eine auf einen Flaschenhals aufgeschraubte Pumpe in Grundstellung,

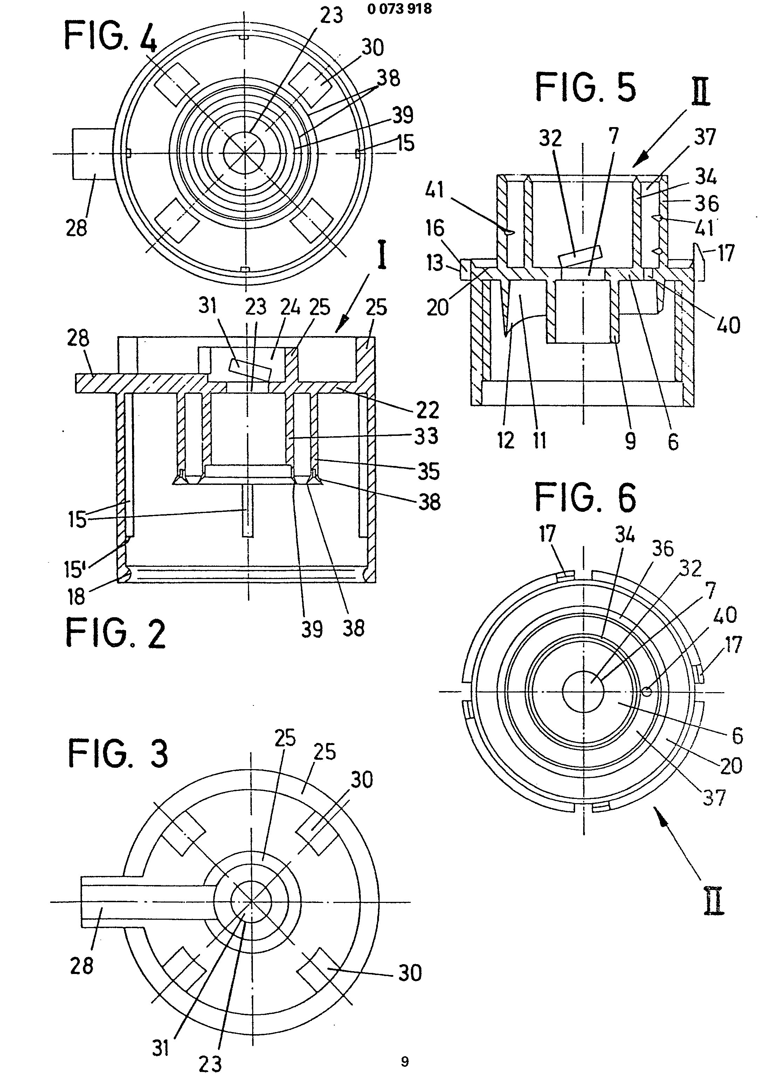

Fig. 2 einen entsprechenden Schnitt durch das Oberteil in Einzeldarstellung,

Fig. 3 die Draufsicht hierzu,

Fig. 4 die Unteransicht des Oberteiles,

Fig. 5 das Unterteil der Pumpe im Vertikalschnitt,

Fig. 6 die Draufsicht hierzu,

Fig. 7 den Deckel im Vertikalschnitt,

Fig. 8 die Draufsicht hierzu, und

Fig. 9 den Deckel in Unteransicht.

Die Pumpe P besteht aus einem Oberteil I, einem Unterteil II sowie einem Deckel III. Es handelt sich um Kunststoffspritzteile, die der zugedachten Funktion entsprechend aus mehr oder weniger rückstellfähigem Material bestehen.

Das Unterteil II ist als Schraubkappe 4 gestaltet. Deren Innengewinde wirkt mit einem entsprechenden Aussengewinde des Halses 5' einer Flasche 5 zusammen. Die als Querwand 6 ausgebildete Decke der Schraubkappe 4 besitzt eine zentrale Durchtrittsöffnung 7 für den Behälterinhalt 8. Der Durchtrittsöffnung 7 flaschenseitig vorgelagert und in einer Buchse 9 verankert befindet sich ein in kurzem Abstand vor dem nicht näher dargestellten Flaschenboden endendes Steigrohr 10. Das Steigrohr kann der Kappe 4 auch materialeinheitlich angeformt sein. Konzentrisch zur Buchse 9 liegt eine in den Flaschenhals 5' ragende Ringwand 11 mit Schneidvorsprung 12, beispielsweise zum Durchtrennen einer Flaschenschliessmembrane aus Staniol, Kunststoff od. dgl.

Die Querwand 6 setzt sich über den Schraubkappendurchmesser hinausgehend in einen höhengleich liegenden, peripheren Führungsrand 13 fort. Über dessen Zylinderwand gleitet das teleskopartig verschiebliche Oberteil I der Pumpe P.

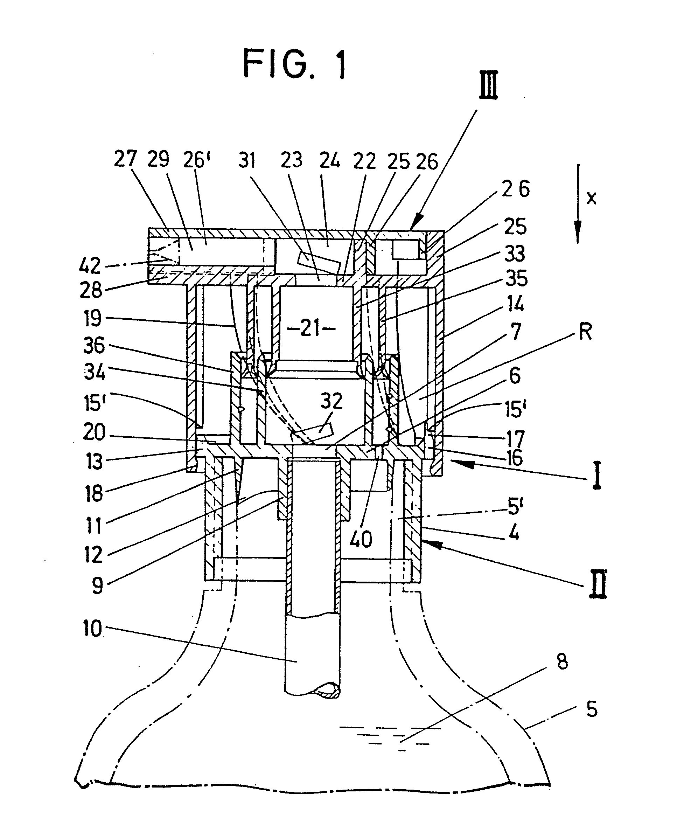

Zur Drehsicherung bei Abwärtsverlagerung sind der Zylinderwandung 14 des Oberteiles auf der dem Führungsrand 13 zugerichteten Innenfläche in Verschieberichtung liegende Führungsrippen 15 angeformt. Letztere greifen in passende Nuten 16 des Unterteiles II ein. Das untere Stirnende 15' der Rippen 15 endet in Grundstellung der Pumpe kurz oberhalb des Führungsrandes 13, ist also in der aus Fig. 1 ersichtlichen Grundstellung der Pumpe ausser Eingriff mit der korrespondierenden Nut 16. Die eine Nutflanke jeder Nut 16 setzt sich in einen nach oben gerichteten Vorsprung 17 fort. Letzterer dient als Drehbegrenzungsanschlag für die Führungsrippen 15. Das Oberteil kann zufolge des grundsätzlichen rotationssymmetrischen Aufbaues in Grundstellung gedreht werden, bis die Führungsrippen 15 gegen die Vorsprünge 17 treten. In dieser Stellung lässt sich das Oberteil unter Ausübung der Pumpbewegung verschieben.

Ist hingegen das Oberteil in bezug auf das Unterteil so verdreht, dass das Stirnende 15' nicht mit der Nut 16 fluchtet, so ist die Pumpbetätigung gesperrt. Das Stirnende 15' trifft auf den Führungsrand 13. Die entsprechende Sicherung verhindert ein ungewolltes Verspenden des Behälterinhaltes.

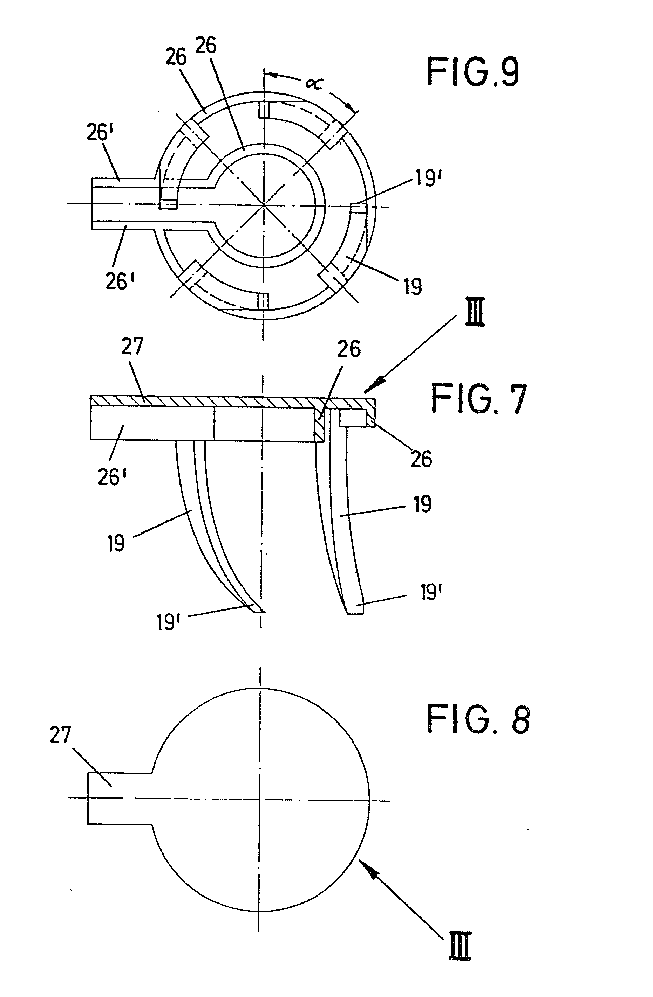

Das Oberteil I ist so gestaltet, dass es im Wege der einfachen Klipszuordnung mit dem Unterteil II verbunden werden kann. Hierzu bildet die innenseitige Randzone des kappenförmigen Oberteils I einen Klipswulst 18 aus. Letzterer hintergreift die untere Randkante des Führungsrandes 13. Das Oberteil I ist durch Rückstellfedern in dieser anschlagbegrenzten Grundstellung gehalten. Diese Rückstellfedern sind von dem Deckel III materialeinheitlich angeformten Federbeinen 19 gebildet. Sie gehen von dessen Unterseite aus und stützen sich mit ihren freien Enden 19' auf der einen randnahen Boden 20 des Unterteils II bildenden Querwand 6 ab. Es sind vier solcher Federbeine vorhanden. Je nach der grössenmässigen Grundkonzeption der Pumpe können es auch mehr sein. Die Federbeine 19 erstrecken sich in einer die Pumpenkammer 21 der Pumpe P abgeschattet umgebenden Ringkammer R und sind dem Ringverlauf entsprechend in Umfangsrichtung gekrümmt. Die Krümmung der Federbeine ist gleichsinnig und erstreckt sich in Grundstellung etwa über einen Winkel α von 45° (vgl. Fig. 9). Die im Deckel III wurzelnden Federbeine 19 laufen zu ihren freien Enden leicht kontinuierlich verjüngend zu, was formtechnisch vorteilhaft ist. Sie weisen eine leichte Verspannung auf.

Die Querwand des Oberteiles I bildet unter Berücksichtigung des sie im Abstand überfangenden Deckels III praktisch eine Innenwand 22. Letztere weist, wie die Querwand 6 des Unterteils II, ebenfalls eine zentrale Durchtrittsöffnung 23 für den Behälterinhalt 8 auf. Die Oberseite der Innenwand ist von ringförmigen Rippen 25 überragt. Letztere sind so geformt, dass die eine eine konzentrisch zum Lochrand der Durchtrittsöffnung 23 liegende, gegenüber diesem Lochrand zurückversetzte Ventilkammer 24 umschreibt. Die konzentrisch hierzu angeordnete zweite periphere Rippe 25 formt einen Einlagerungsrand für den Deckel III, so dass dieser radial gesichert und axial beispielsweise durch Verklipsen befestigt ist. Der Deckel seinerseits besitzt eine konzentrisch zur ventilkammerbildenden Rippe 25 liegende Ringrippe und diese umfassende Ringrippe 26, welche der Unterseite des Deckels angeformt ist, bis auf die Oberseite der Innenwand 22 des Oberteiles I reicht und sich darauf abstützt. Diese Ringrippe 26 geht sodann in zwei auswärts gerichtete, parallel zueinander verlaufende Rippenabschnitte 26' über (es wird auf Fig. 9 verwiesen), die, zusammen mit einer oberseitigen, ebenfalls auswärts weisenden Deckelverlängerung 27 einen im Querschnitt U-förmigen Tunnel formen, der zusammen mit einem auswärts gerichteten, die Zylinderwandung 14 überragenden Lappen 28 einen Mündungskanal 29 der Pumpe formt. Der den Lappen 28 bildende Abschnitt der Innenwand ist bis in den Bereich der Ventilkammer 24 etwas erhöht, so dass das vom Deckel gebildete U-Profil diese Verdickung seitlich übergreifen kann. Auch hier lässt sich eine z.B. sogar irreversible Klipszone realisieren.

Unmittelbar vor der äusseren Rippe 25 sind in der Innenwand 22 des Oberteiles Durchbrechungen 30 berücksichtigt zum Durchtritt der in die Ringkammer R ragenden Federbeine 19.

Des weiteren ist der Innenwand 22 ein in der Ventilkammer 24 liegendes Ventil 31 angeformt. Es handelt sich um ein mit dem Lochrand der Durchtrittsöffnung 23 über ein Filmscharnier verbundenes Plättchen, das den oberen Rand des Loches überfängt.

Das zweite Ventil 32 ist dem Unterteil II in entsprechender Weise angeformt. Es befindet sich auf der Oberseite der Querwand 6 über der zentralen Durchtrittsöffnung 7.

Die Pumpenkammer 21 ist unmittelbar von dem Oberteil und Unterteil angeformten, inneren Ringwänden 33 bzw. 34 gebildet. Die innere Ringwand 33 greift in die von der äusseren Ringwand 34 umschriebene Höhlung ein. Die Ringwand 33 des Oberteiles ist von einer zweiten, höhengleich abschliessenden äusseren Ringwand 35 umgeben.

Die innere Ringwand 34 des Unterteiles II wird ebenfalls von einer äusseren Ringwand 36 umschlossen. Zwischen beiden Ringwandpaaren verbleibt ein Ringschacht von etwa der doppelten Wandungsdicke einer Ringwand. Auch die Ringwände des Unterteiles schliessen höhengleich ab.

Die äussere Ringwand 35 des Oberteiles I taucht in Grundstellung etwa zu einem Drittel in den Ringschacht 37 zwischen der äusseren Ringwand 36 und der inneren Ringwand 34 des Unterteiles II ein. Das Stirnende der äusseren Ringwand 35 des Oberteils I ist gespalten und bildet die Wandflächen der äusseren Ringwand 35 beidseitig überragende Dichtlippen 38 aus, die über die korrespondierenden Wandflächen der inneren Ringwand 34 und äusseren Ringwand 36 des Unterteiles II fahren.

Die innere Ringwand 33 des Oberteiles I weist ebenfalls eine Dichtlippe 39 auf, welche die Aussenfläche dieser Ringwand 33 überragt und sich, wie aus Fig. 1 ersichtlich, an der Innenfläche der Innenwand 34 des Unterteiles II führt.

In dem den Boden des Ringschachtes 37 formenden Abschnitt der Querwand 6 befindet sich eine Luftdurchtrittsöffnung 40 für den erforderlichen Luftausgleich. Dabei bildet der Raum zwischen den beiden Ringwänden 34 und 36, der Ringschacht 37 nämlich, einen Lufteinlasskanal, der aber in der aus Fig. 1 ersichtlichen Grundstellung durch die Dichtlippen 38 verschlossen ist. Der Luftübertritt wird über Luftübertrittsnischen 41 erzielt. Letztere befinden sich an der Innenfläche der äusseren Ringwand 36 des Unterteiles II. In dem Moment, in dem der Lippenrand der Dichtungslippen 38 diese Nischen erreicht, kann der Luftausgleich stattfinden. Wie ersichtlich, sind mehrere solcher Nischen in Pumpenbetätigungsrichtung x hintereinanderliegend angeordnet. Über die Nischen 41 ergibt sich der weitere Luftströmungsanschluss über die Ringkammer R und die im Ringspalt von Ober- und Unterteil liegenden Nuten 16.

Die Funktionsweise der Pumpe P ist kurz zusammengefasst wie folgt: Das Oberteil I wird entgegen Federbelastung in Pumpenbetätigungsrichtung x abwärts gedrückt. Dabei verringert sich das Volumen der Pumpenkammer 21. Bei Abwärtsbewegung schliesst sich das Ventil 32. Nach Loslassen stellt sich das Oberteil wieder in die Grundstellung zurück. Hierbei entsteht innerhalb der Pumpenkammer 21 Unterdruck, der dazu führt, dass über das Steigrohr 10 Behälterinhalt 8 angesaugt wird. Es öffnet sich das Ventil 32 am Boden der Pumpenkammer 21, wohingegen das Ventil 31 in der Ventilkammer 24 in Schliessstellung klappt. Unter Ausübung eines erneuten Druckes in Richtung des Pfeiles x verkleinert sich die Pumpenkammer 21 durch Ineinanderschieben der kammerbildenden Ringwände 33, 34. Dabei wird der in der Pumpenkammer 21 vorhandene Behälterinhalt verdrängt. Durch das bodenseitige Ventil ist der Rückweg gesperrt. Dagegen öffnet sich das Ventil 31. Der verdrängte Behälterinhalt tritt über die dortige Durchtrittsöffnung 23 in den quergerichteten Mündungskanal 29 nach aussen. Bei flüssigem Behälterinhalt kann in den Endbereich des Mündungskanals 29 eine in strichpunktierten Linien wiedergegebene Sprühdüse 42 eingesetzt sein. Bei noch eben fliessfähigem oder sogar leicht pastösem Behälterinhalt 8 wird hingegen eine gleichbleibende Mündungskanalquerschnittsgrösse beibehalten.

Die Pumpe P kann auch als Dosierspender für pastöse Massen eingesetzt werden. Hierzu wird das Steigrohr 10 entfernt und das Spendergehäuse so gestaltet, dass unter Atmosphärendruck eine Volumenverkleinerung möglich ist, z.B. durch zusammendrückbaren Innensack oder einen in Mündungsrichtung wandernden Kolben. Ein Luftausgleichsweg ist hier wegzulassen.

## Patentansprüche

1. Auf Behälter, insbesondere Flaschen, aufsetzbare Pumpe zum Entnehmen des Behälterinhaltes, bestehend aus einem Unterteil und einem hierzu teleskopartig verschieblichen Oberteil, welches von Rückstellfedern belastet ist und ein Ventil trägt, das, gegensinnig wirkend zu einem Ventil des Unterteiles, ausgangsseitig der Pumpenkammer angeordnet ist, dadurch gekennzeichnet, dass das Ventil (31) an einer sich quer zur Pumpenbetätigungsrichtung (x) des Oberteiles (I) erstreckenden Innenwand (22) des Oberteiles angeordnet und von Rippen (25) überragt ist, auf welchen Rippen ein Deckel (III) des Oberteiles (I) aufliegt, der zusammen mit einem Abschnitt der Innenwand (22) einen Mündungskanal (29) formt und von dessen Unterseite Federbeine (19) ausgehen, welche Durchbrechungen (30) der Innenwand (22) durchsetzen und sich mit ihren freien Enden (19') auf einem randnahen Boden (20) des Unterteiles (II) einer von Ober- und Unterteil gebildeten, für den Behälterinhalt unzugänglichen Ringkammer (R) abstützen.

2. Pumpe nach Anspruch 1, dadurch gekennzeichnet, dass die Federbeine (19) als materialeinheitlich angeformte Streifen und in Umfangsrichtung der Ringkammer (R) gebogen sind.

3. Pumpe nach Anspruch 1, dadurch gekennzeichnet, dass die Pumpenkammer (21) von zwei ineinandergreifenden Ringwandpaaren des Ober- und Unterteiles (I, II) gebildet sind, wobei die Ringwände (33, 35) des Oberteiles (I) mit Dichtlippen (38, 39) längs den Flächen der Ringwände (34, 36) des Unterteiles (II) derart schleifen, dass die äussere Ringwand (35) des Oberteiles (I) mit zwei Dichtlippen (38) an beiden Ringwänden (34, 36) des Unterteiles (II) schleift.

4. Pumpe nach Anspruch 3, dadurch gekennzeichnet, dass der einen Ringschacht (37) bildende Raum zwischen den beiden Ringwänden (34, 36) des Unterteiles (II) der Lufteinlasskanal ist, der im Bereich der Innenwand (22) eine Luftdurchtrittsöffnung (40) aufweist, und dass die äussere Ringwand (36) von den Lippen (38) überfahrbare Luftübertrittsnischen (41) besitzt.

## Claims

1. A pump which may be mounted upon containers, in particular bottles, for the removal of the container contents, consisting of a lower part and an upper part which may be displaced telescopically with respect to the latter and which is loaded by return springs and carries a valve which, acting in the opposite direction to a valve in the lower part, is arranged at the outlet from the pump chamber, characterized in that the valve (31) is arranged on an inner wall (22) of the upper part, which extends transversely to the direction (x) of pumping actuation of the upper part (I) and beyond which project ribs (25) upon which rests a cover (III) of the upper part, which forms together with a portion of the inner wall (22) a mouth channel (29) and from the underside of which extend spring legs (19) which pass through openings (30) in the inner wall (22) and bear by their free ends (19') against a base (20) near the edge of the lower part (II) of an annular chamber (R) formed of an upper part and a lower part and inaccessible to the container contents.

2. A pump as claimed in Claim 1, characterized in that the spring legs (19) are curved as strips moulded in one with the material and in the direction circumferential to the annular chamber (R).

3. A pump as claimed in Claim 1, characterized in that the pump chamber (21) is formed of two pairs of annular walls of the upper part (I) and lower part (II) engaging in one another, the annular walls (33, 35) of the upper part (I) sliding by sealing lips (38, 39) along the faces of the annular walls (34, 36) of the lower part (II) in such a way that the outer annular wall (35) of the upper part (I) slides by two sealing lips (38) against both annular walls (34, 36) of the lower part (II).

4. A pump as claimed in Claim 3, characterized in that the space forming an annular compartment (37) between the two annular walls (34, 36) of the lower part (II) is the air inlet channel which exhibits in the region of the inner wall (22) an air passage (40), and that the outer annular wall (36) has air overflow niches (41) over which the lips (38) can travel.

**Revendications**

1. Pompe à monter sur un récipient, notamment un flacon, pour le prélèvement du contenu du récipient, consistant en une partie inférieure et une partie supérieure, coulissant télescopiquement par rapport à celle-ci, chargée par ressort, et portant une soupape disposée pour agir à contresens d'une soupape prévue sur la partie inférieure, avec un récipient disposé du côté refoulement de la chambre de pompage, pompe caractérisée en ce que la soupape (31) est disposée sur une paroi intérieure (22) de la partie de pompe supérieure (I), s'étendant transversalement à la direction d'action de pompage (x) de la partie supérieure et pourvue de nervures saillantes (25) sur lesquelles s'applique un couvercle (III) de la partie de pompe supérieure (I) qui forme, en commun avec une portion de la paroi intérieure (22), un canal de débouché (29), et de la face inférieure duquel partent des branches de ressort (19) qui traversent des percements (30) de la paroi intérieure (22) et qui s'appuient, avec leurs extrémités libres (19'), sur un fond (20) proche du bord de la partie de pompe inférieure (II) d'une chambre annulaire (R), formée par les parties de pompe supérieure et inférieure, inaccessible pour le contenu du récipient.

2. Pompe suivant la revendication 1, caractérisée en ce que les branches de ressort sont constituées par des bandes conformées en un seul matériau et qui sont recourbées en direction du pourtour de la chambre annualaire (R).

3. Pompe suivant la revendication 1, caractérisée en ce que la chambre de pompage (21) est formée par deux paires de parois annulaires de la paroi supérieure (I) et de la partie inférieure (II) de pompe, engagées l'une dans l'autre, auquel cas les parois annulaires (33, 35) de la partie supérieure (I) glissent avec des lèvres d'étanchéité (38, 39) le long des surfaces des parois annulaires (34, 36) de la partie inférieure (II), de telle manière que la paroi annulaire extérieure (35) de la partie supérieure (I) glisse, avec deux lèvres d'étanchéité (38), sur chacune des parois annulaires (34, 36) de la partie inférieure de pompe (II).

4. Pompe suivant la revendication 3, caractérisée en ce que l'un des espaces formant un puits annulaire (37) entre les deux parois annulaires (34, 36) de la partie inférieure (II) constitue un canal d'entrée d'air qui présente, dans la zone de la paroi intérieure (22), un orifice de passage d'air (40), et que la paroi annulaire extérieure (36) comporte des fentes de passage d'air (41) sur lesquelles passent les lèvres d'étanchéité (38).

# FIG. 1

0 073 918

**FIG. 4**

**FIG. 5**

**FIG. 2**

**FIG. 6**

**FIG. 3**

9

FIG.9

FIG. 7

FIG. 8